# EUROPÄISCHE PATENTSCHRIFT

(11) **EP 0 344 496 B1**
(45) Veröffentlichungstag und Bekanntmachung des Hinweises auf die Patenterteilung: **04.08.1993**
(21) Anmeldenummer: 89108562.3
(22) Anmeldetag: 12.05.1989
(51) Int. Cl.: G01L 1/22

(54) **Halter für das Anbringen eines Dehnungsgebers**
Support for installing of a strain gange
Support pour l'installation d'une strain-gange

(30) Priorität: 28.05.1988 DE 3818175
(43) Veröffentlichungstag der Anmeldung: 06.12.1989
(73) Patentinhaber: Mannesmann Kienzle GmbH (HR B1220), 78052 Villingen-Schwenningen (DE)
(72) Erfinder: Jeschonneck, Harald, Dipl.-Ing.(FH), D-7730 Villingen-Schwenningen (DE)

(56) Entgegenhaltungen:
- DE-A- 3 617 085
- DE-U- 8 503 967

## Beschreibung

Die Erfindung betrifft einen Halter für das Anbringen eines Dehnungsgebers in einer in einer Wand befindlichen Öffnung, wobei der innerhalb des Halters angeordnete Dehnungsgeber im wesentlichen in einer Ebene wirksam ist und nach der Montage des in die Öffnung einpreßbaren Halters die Wirkungsebene des Dehnungsgebers senkrecht zur Öffnungsachse ausgerichtet ist.

Derartige Halter sind aus den Druckschriften DE-A-3 617 085 und DE-U-8 503 967 bekannt.

Bei der Dehnungsmessung ist zur Erzielung eines möglichst hohen Nutz-/Störsignal-Verhältnisses bekanntlich die Art und Weise und die Qualität der Befestigung des Dehnungsgebers beispielsweise in einer die zu messenden Dehnungen leitenden Wand von entscheidender Bedeutung. Das heißt, die Meßwert- bzw. Dehnungsübertragung muß an den durch den Einbau des Dehnungsgebers erforderlichen Fügestellen und den dadurch zwangsweise entstehenden Schnitt- bzw. Störstellen möglichst störungsarm und in für den Dehnungsgeber optimalen Richtungen erfolgen. Das heißt ferner, daß an den Fügestellen zwischen dem Dehnungsgeber und einem für den Einbau geeigneten bzw. für die Handhabung beim Einbau erforderlichen Halter sowie zwischen dem Halter und der leitenden Wand ein außergewöhnlich inniger Flächenkontakt geschaffen werden muß, wenn z. B. Dehnungen von wenigen µm zufriedenstellend erfaßt werden sollen.

Dabei ist jedoch zu vermeiden, daß bei dem angestrebten Flächenkontakt Flächenpressungen auftreten, die den elastischen Bereich der gewählten Werkstoffpaarung der Fügestelle, bei welcher ohnehin Sorge getragen werden muß, daß Werkstoffe gleicher Steifigkeit verwendet werden, derart einengen, daß die zu messenden Dehnungen den Bereich der plastischen Verformung erreichen oder überschreiten,und durch diesen Effekt wiederum eine Dämpfung der Meßwertübertragung erfolgt.

Es ist somit an der von der leitenden Wand her gesehen ersten Fügestelle zwischen dem Halter des Dehnungsgebers und der Wand, in der der Halter durch Einpressen in eine geeignete Öffnung befestigt werden soll, lediglich eine Übergangspassung oder eine leichte Preßpassung vorzusehen. Solche Passungen bereiten jedoch in Kraftfahrzeug-Kundendienstwerkstätten oder an einer stationären Anlage vor Ort unter noch als wirtschaftlich anzusehenden Fertigungsbedingungen insbesondere dann erhebliche Schwierigkeiten, wenn der geschilderte, für eine störungsminimierte Meßwertübertragung erforderliche Flächenkontakt gegeben sein soll.

Da die Öffnung für den Halter von dem Anwender des Dehnungsgebers herzustellen ist, muß bei einer wirtschaftlich noch zumutbaren und durchaus gehobenen Fertigungsqualität für die betreffende Bohrung - Fertigungsqualität im um Bereichaufgrund von Rauhigkeit, Welligkeiten, Exzentrizitäten, Querschnittsveränderungen in axialer Richtung, Spannungsverzug infolge Erwärmung beim Bohrvorgang und dergl. mit Oberflächenstrukturen gerechnet werden, die den angestrebten Flächenkontakt erst bei wiederum im Bereich plastischer Verformungen liegenden und somit unzulässig hohen Flächenpressungen gestatten würden.

Die zweite Fügestelle zwischen dem Dehnungsgeber und dem Halter ist in dieser Hinsicht weniger kritisch, da sie vom Hersteller vorgefertigt wird und hierfür relativ hochtechnisierte Fertigungsmittel, z. B. spezielle Schweißverfahren, zur Verfügung stehen, die eine negative Beeinflussung des Dehnungsgebers durch uneinheitlichen Wärmeverzug oder durch Gefügeveränderungen in der Randzone ausschließen.

Es ist somit davon auszugehen, daß mit den Oberflächen- bzw. Passungsstrukturen, insbesondere zwischen Halter und leitender Wand, wie sie bei den üblichen, beim Einbau anwendbaren Fertigungsmethoden entstehen, erhebliche Meßfehler in Kauf zu nehmen sind und unter Umständen die völlige Wirkungslosigkeit des Dehnungsgebers zu befürchten ist, zumal die eigentlichen Wandlerelemente der verwendeten, scheibenförmig ausgebildeten Dehnungsgeber, wie beispielsweise piezoresistive Elemente bzw. Strukturen, lediglich in einem schmalen Bereich, sozusagen in einer Ebene und innerhalb dieser Ebene in Richtung einer oder mehrerer Wirkungslinien optimal wirksam sind, der Halter aber auf einer sehr viel größeren Länge, in der Regel der Wandstärke, mit der Wand in Verbindung steht. Es ist andererseits aber auch auszuschließen, daß mit wirtschaftlich noch vertretbarem Aufwand ein 100 %iger Flächenkontakt zwischen Halter und Wand, also der Idealzustand, erzielbar ist.

Die Aufgabe der vorliegenden Erfindung bestand somit darin, einen Halter zu schaffen, mittels dessen ein Dehnungsgeber der genannten Art auf einfache Weise in einer mit üblichen Fertigungsmethoden herstellbaren Öffnung in einer Wand derart anbringbar ist, daß Störungen durch Fertigungsungenauigkeiten beim Bohren der Öffnung weitgehend vermieden sind und eine optimale Meßwertübertragung auf den Dehnungsgeber gewährleistet ist.

Diese Aufgabe wird mit der durch Anspruch 1 beanspruchten Erfindung gelöst, mit weiteren Ausgestaltungen in den abhängigen Ansprüchen.

Ein bevorzugtes Ausführungsbeispiel ist dadurch gekennzeichnet, daß der Halter aus einer axial geschlitzten, mit einem Innenkonus versehenen Spreizhülse und einem den Dehnungsgeber tragenden und mit einem dem Innenkonus der Spreizhülse zugeordneten Außenkonus versehenen Gehäuse gebildet ist.

Die Maßnahme, den Halter derart auszubilden, daß die maximale Flächenpressung wenigstens in der Wirkungsebene des Dehnungsgebers liegt, bietet den Vorteil, daß die bei üblichen Toleranzgrenzen und relativ hohen Fertigungsqualitäten beliebig verteilten und großflächig sowie ungleichmäßig tragenden, fertigungsbedingten Oberflächenstrukturen der Bohrung, welcher der Halter zugeordnet werden soll, bezüglich der Meßwertübertragung wirkungslos sind. Dabei ist erwähnenswert, daß diese Verbesserung der Funktion ausschließlich durch gestalterische Maßnahmen und nicht durch Anwendung aufwendiger und wirtschaftlich nicht mehr zu rechtfertigender Feinbearbeitungsverfahren erzielbar ist.

Ein weiterer Vorteil der Erfindung ist darin zu sehen, daß die Flächenkontakte bzw. die Traganteile gezielt an definierten Stellen des Halters vorgesehen sind. Außerdem sind beim Einbau des Halters die Wirkungslinien der Wandlerelemente des Dehnungsgebers in die Richtungen der zu erfassenden Dehnungen ausrichtbar, wobei gewährleistet ist, daß in Richtung jeder Wirkungslinie jeweils die gleiche, und zwar maximale Flächenpressung und somit die beste Dehnungsübertragung erfolgt, also ein Meßfehlerminimum justierbar ist. Das heißt ferner, daß auf diese Weise nicht erwünschte Dehnungen, beispielsweise durch Biegespannungen hervorgerufene und von Temperaturdehnungen überlagerte Dehnungen trotz des höheren Absolutbetrages gegenüber den zu messenden, durch Scherspannungen verursachten Dehnungen unterdrückbar sind.

Besonders vorteilhaft ist ferner die zweiteilige Ausführung des Halters, durch die der Halter situationsgerecht durch Aufspreizen anbringbar und auch auf einfache Weise lösbar ist, mit der der Dehnungsgeber ferner mit hoher Genauigkeit justierbar und die Flächenpressung einstellbar ist. Auch bei diesem Ausführungsbeispiel erfolgt der Kraftfluß einer Dehnung über bewußt gewölbte Kontaktflächen an der Mantelfläche des als Spreizhülse ausgebildeten einen Halterteils.

Im folgenden sei die Erfindung anhand der beigefügten Zeichnungen näher erläutert. Es zeigen
FIGUR 1 eine axiale Schnittdarstellung des in die Wand eingebauten Halters in einer nicht maßstäblichen Darstellung der Passungsverhältnisse,
FIGUR 2 eine Draufsicht auf den Halter gemäß FIGUR 1 mit eingesetztem Dehnungsgeber in Pfeilrichtung P,
FIGUREN 3 A, B, C verschiedene Querschnittsformen des Halters,
FIGUR 4 einen Axialschnitt durch eine zweiteilige Ausführung des Halters.

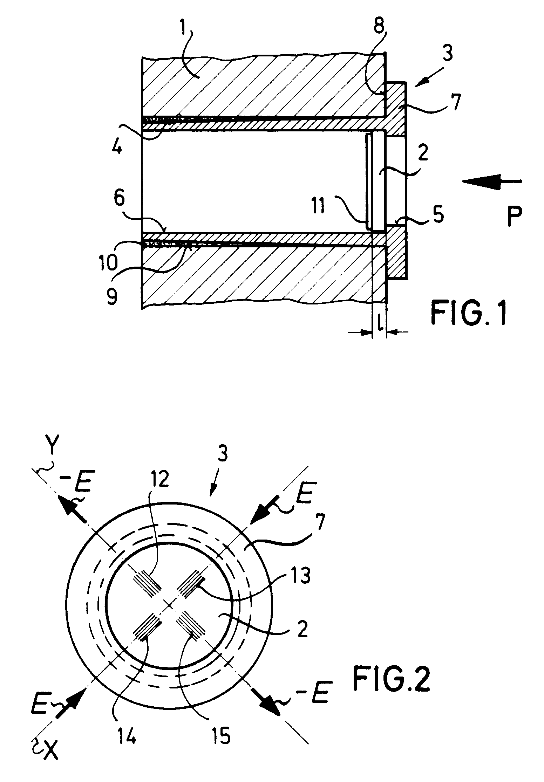

Mit 1 ist in FIGUR 1 beispielsweise die Wand einer Fahrzeugachse bezeichnet, an welcher ein Dehnungsgeber 2 zur Überwachung der Beladung des betreffenden Fahrzeuges befestigt ist. Zu diesem Zwecke ist ein Halter 3 vorgesehen, welchem an einer für das Erfassen der zu messenden Dehnungen, vorzugsweise das Erfassen von Scherspannungen, geeigneten Stelle der Achse eine im wesentlichen zylindrische Bohrung 4 zugeordnet ist. Der Halter 3 ist bei dem gewählten Ausführungsbeispiel als Hülse ausgebildet, die eine zweistufige Öffnung 5, 6 aufweist und an der ein Flansch 7 angeformt ist. Der Dehnungsgeber 2, eine flache Scheibe aus Federstahl, auf der die eigentlichen piezoresistiv wirksamen Wandlerelemente aufgebracht sind, ist in der Öffnung 5/6 befestigt, wobei seine Lage innerhalb des Halters 3 durch die nicht näher bezeichnete Stirnfläche der gestuften Öffnung 5, 6 definiert ist und mit der Lage der Stirnfläche in bezug auf die Flanschfläche 8 auch die Lage des Dehnungsgebers 2 bzw. dessen Wirkungsebene innerhalb der Wand 1 bestimmbar ist. Die Öffnung 5, 6 kann selbstverständlich auch derart ausgebildet sein, daß der Dehnungsgeber 2 von der Flanschseite in den Halter 3 einsetzbar ist.

Die Mantelfläche 9 des Halters 3, die mit der zylindrischen Bohrung 4 im Sinne einer Preßverbindung zusammenwirkt, ist erfindungsgemäß nicht zylindrisch, sondern 2 bis 3° konisch oder auch gestuft ausgebildet. Lediglich eine dem Dehnungsgeber 2 entsprechende Länge 1 kann zylindrisch gestaltet sein. Dadurch wird der tragende Teil der Mantelfläche 9 in die Wirkungsebene des Dehnungsgebers 2 gelegt bzw. es wird in diesem Bereich der innigste Flächenkontakt zwischen dem Halter 3 und der Bohrung 4 erzielt. Zur Sicherung des Halters 3 in axialer Richtung kann im Bereich der Verjüngung des Halters zusätzlich ein Klebemittel 10 Anwendung finden. Mit 11 ist ein dem Dehnungsgeber 2 zugeordneter Isolierring bezeichnet, mittels dessen ein nicht dargestelltes Kabel, das bei dieser Ausführungsform innerhalb der Achse verlegt sein muß, mit den Anschlüssen der Wandlerelemente des Dehnungsgebers 2 verbindbar ist, mit anderen Worten, mittels des Isolierringes 11, in welchem die Leitungsenden der Wandlerelemente zusammengeführt sind, werden Lötzungen für den Kabelanschluß zur Verfügung gestellt.

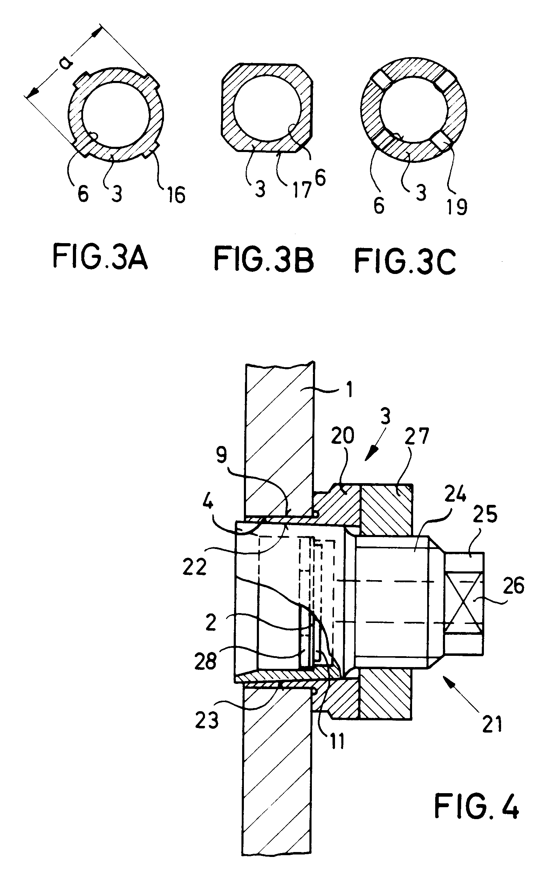

Vorzugsweise sind, wie FIGUR 2 zeigt, die symbolisch dargestellten, als Wandlerelemente dienenden Widerstände 12, 13, 14 und 15 des Dehnungsgebers 2 derart angeordnet, daß sich die Wirkungslinien X und Y zweier Elemente, in deren Richtung der Dehnungsgeber 2 bei Belastung ein optimales Meßsignal liefert, kreuzen. Sie sind ferner, was nicht dargestellt ist, als Vollbrücke geschaltet, um unerwünschte Dehnungskomponenten weitgehend kompensieren zu können. Da, auch beschränkt auf die Wirkungsebene des Dehnungsgebers, ein völlig gleichmäßiger Flächenkontakt zwischen Halter 3 und Bohrung 4 über den gesamten Umfang des Halters 3 nicht mit Sicherheit erzielbar ist, muß bei einer solchen Anordnung sichergestellt sein, daß die Meßgröße, um eine optimale Funktion des Dehnungsgebers 2 zu erzielen, zumindest kreuzweise diametral in Richtung der Wirkungslinien X, Y gemäß der Dehnungsvektoren E und -E in den Dehnungsgeber 2 eingeleitet wird. Dementsprechend sind, wie die FIGUREN 3A und 3B zeigen, an der Mantelfläche 9 des Halters 3 axial verlaufende Rippen 16 oder Flächen 17 angeformt, um ganz bestimmte, mit Sicherheit tragende, mechanische Kontaktstellen zu schaffen. Diese mechanischen Kontaktstellen, über die die jeweiligen Größtmaße im größten Querschnitt eines Halters meßbar sind, müssen am Umfang des Halters 3 derart verteilt sein, daß sie beim Einbau des Dehnungsgebers 2 in den Halter 3 mit den Wirkungslinien der Wandlerelemente zur Deckung gebracht werden können. Beim Einbau des Halters in der leitenden Wand ist dann bei entsprechender Markierung des Halters 3 auf einfache Weise eine Ausrichtbarkeit der Wirkungslinien des Dehnungsgebers 2 auf die zu erwartenden Dehnungsrichtungen erzielbar.

Eine optimale Lösung stellt jedoch die Ausführung gemäß FIGUR 3C insbesondere deshalb dar, weil sie leichter herstellbar und das Material des Halters 3 in gewissen Grenzen wählbar ist, der Halter beispielsweise auch aus Kunststoff gefertigt sein könnte. Bei dieser Ausführungsform sind in der Wand des Halters 3, und zwar im Bereich der Wirkungsebene des Dehnungsgebers 2 der Meßwertübertragung dienende Tragkörper 19 eingebettet.

Die mit der FIGUR 4 dargestellte Ausführungsform sieht einen Halter 3 vor, der aus zwei Teilen, einer Spreizhülse 20 und einem den Dehnungsgeber 2 aufnehmenden Gehäuse 21, besteht. Die Spreizhülse 20, die axial geschlitzt ist, weist einen Innenkonus 22 auf, dem ein am Gehäuse 21 ausgebildeter Außenkonus 23 entspricht. Ferner ist an dem Gehäuse 21 ein Gewindeansatz 24 sowie ein Ansatz 25 mit wenigstens zwei achssymmetrisch angebrachten Flächen 26 angeformt. Die Befestigung des Halters 3 erfolgt durch loses Einführen in die Bohrung 4 und durch radiales Aufspreizen der Spreizhülse 20 mittels einer als Spannelement dienenden Mutter 27, die dem Gewindeansatz 24 des Gehäuses 21 zugeordnet ist und sich während des Spannens an der Spreizhülse 20 abstützt. Vorzugsweise wird die Mutter 27 mit einem drehmomentbegrenzenden Werkzeug betätigt. Mittels des Ansatzes 25 läßt sich der Halter 3 vor dem endgültigen Festspannen auf einfache Weise ausrichten und gegen Verdrehen arretieren. Der bei diesem Ausführungsbeispiel als dünne Membran ausgebildete Dehnungsgeber 2 ist an einem ringförmigen Träger 28 befestigt.

Der Vollständigkeit halber sei noch erwähnt, daß nach dem Einsetzen des Halters zweckmäßigerweise eine Funktionsprüfung vorgenommen wird. Dabei muß im mechanisch unbelasteten Zustand die Diagonalspannung der Meßbrücke Null sein, was durch die erfindungsgemäße Gestaltung zwangsweise erzielt wird.

## Patentansprüche

1. Vorrichtung zur Dehnungsmessung mit einem Halter (3) zum Anbringen eines Dehnungsgebers (2) in einer in einer Wand befindlichen Öffnung, wobei der innerhalb des Halters (3) angeordnete Dehnungsgeber (2) im wesentlichen in einer Ebene wirksam ist und nach der Montage des in die Öffnung einpreßbaren Halters (3) die Wirkungsebene des Dehnungsgebers (2) senkrecht zur Öffnungsachse ausgerichtet ist,
dadurch gekennzeichnet,
daß ein hülsenförmiger, mit einer gestuften Öffnung (5, 6) versehener Halter (3) vorgesehen ist,
daß an einer Mantelfläche (9) des Halters (3) in axialer Richtung verlaufende Rippen (16) oder Flächen (17) diametral gegenüberliegend ausgebildet sind, deren Durchmesser dem Durchmesser der Wandöffnung (4) im Sinne einer Preßpassung entsprechen,
daß ein Dehnungsgeber (2) vorgesehen ist, dessen als Wandlerelemente dienende Widerstände (12, 13, 14, 15) derart angeordnet sind, daß sich die Wirkungslinien (X, Y) zweier Wandlerelemente kreuzen,
daß der Dehnungsgeber (2) auf einem scheibenförmigen oder ringförmigen Träger befestigt ist und
daß der Träger in die Hülsenöffnung (6) größeren Durchmessers derart befestigt ist, daß die Wirkungslinien (X, Y) jeweils diametral gegenüberliegende Rippen (16) oder Flächen (17) durchdringen.

2. Vorrichtung nach Anspruch 1,
dadurch gekennzeichnet,
daß er aus einer axial geschlitzten, mit einem Innenkonus (22) versehenen Spreizhülse (20) und einem den Dehnungsgeber (2) tragenden und mit einem dem Innenkonus (22) der Spreizhülse (20) zugeordneten Außenkonus (23) versehenen Gehäuse (21) gebildet ist.

3. Vorrichtung nach Anspruch 1,
dadurch gekennzeichnet,
daß im Bereich der Wirkungsebene des Dehnungsgebers (2) Tragkörper (19) in die Mantelfläche (9) eingebettet sind.

4. Vorrichtung nach Anspruch 1,
dadurch gekennzeichnet,
daß er durch Anformen der in axialer Richtung verlaufenden Flächen (17) als Polygonprofil ausgebildet ist.

## Claims

1. Apparatus for extension measurement, having a holder (3) for mounting an extension sensor (2) in an opening located in a wall, the extension sensor (2) arranged within the holder (3) being active substantially in one plane and after the holder (3), which can be pressed into the opening, has been assembled the plane of action of the extension sensor (2) being aligned perpendicular to the axis of the opening, characterized in that a sleeve-shaped holder (3) which is provided with a stepped opening (5, 6) is provided, in that there are constructed in diametrically opposed manner on an outer surface (9) of the holder (3) axially running ribs (16) or surfaces (17) whereof the diameters correspond to the diameter of the wall opening (4) in the manner of a press fit, in that an extension sensor (2) is provided whereof the resistors (12, 13, 14, 15) which serve as converter elements are arranged such that there is an intersection of the lines (X, Y) of action of two converter elements, in that the extension sensor (2) is secured to a plate-shaped or annular bearer, and in that the bearer is secured in the sleeve opening (6) of larger diameter such that the lines (X, Y) of action in each case penetrate diametrically opposed ribs (16) or surfaces (17).

2. Apparatus according to Claim 1, characterized in that it is formed from an axially slotted spreading sleeve (20), which is provided with an internal cone (22), and a housing (21) which bears the extension sensor (2) and is provided with an external cone (23) associated with the internal cone (22) of the spreading sleeve (20).

3. Apparatus according to Claim 1, characterized in that bearing elements (19) are embedded in the outer surface (9) in the region of the plane of action of the extension sensor (2).

4. Apparatus according to Claim 1, characterized in that it is constructed as a polygonal profile as a result of integrally forming the axially running surfaces (17).

## Revendications

1. Dispositif pour la mesure d'allongement avec un support (3) pour la mise en place d'un capteur extensométrique (2) dans une ouverture pratiquée dans une paroi, ledit capteur extensométrique (2) disposé à l'intérieur du support (3) étant, pour l'essentiel, efficace dans un seul plan et, après le montage du support (3) pouvant être pressé dans ladite ouverture, le plan d'action dudit capteur extensométrique (2) étant orienté perpendiculairement à l'axe d'ouverture,
caractérisé par le fait
qu'il est prévu un support (3) sous forme de douille pourvu d'une ouverture graduée (5, 6),
que sur une face latérale (9) du support (3) sont formées, diamétralement opposées, des nervures (16) ou surfaces (17) s'étendant dans le sens axial et dont les diamètres correspondent au diamètre de l'ouverture de paroi (4) dans le sens d'un ajustage serré,
qu'il est prévu un capteur extensométrique (2) dont les résistances (12, 13, 14, 15) servant d'éléments transducteurs sont disposées de telle sorte que les lignes d'action (X, Y) de deux résistances se croisent,
que ledit capteur extensométrique (2) est fixé sur un support discoïde ou annulaire et
que le support est fixé dans l'ouverture de douille (6) de diamètre supérieur de telle sorte que les lignes d'action (X, Y) pénètrent des nervures (16) ou surfaces (17) respectivement diamétralement opposées l'une de l'autre.

2. Dispositif selon la revendication 1,
caractérisé par le fait
que ledit support (3) est constitué d'une douille extensible (20) fendue dans le sens axial, pourvue d'un cône intérieur (22) et d'un boîtier (21) porteur du capteur extensométrique (2) et pourvu d'un cône extérieur (23) associé au cône intérieur (22) de la douille extensible (20).

3. Dispositif selon la revendication 1,
caractérisé par le fait
que, dans la zone du plan d'action du capteur extensométrique (2), des corps porteurs (19) sont logés dans la face latérale (9).

4. Dispositif selon la revendication 1,
caractérisé par le fait
que ledit support (3) est formé, par l'adjonction des faces (17) s'étendant dans le sens axial, comme profilé pour arbres cannelés.
